# EUROPÄISCHE PATENTSCHRIFT

(11) **EP 3 992 592 B1**
(45) Veröffentlichungstag und Bekanntmachung des Hinweises auf die Patenterteilung: **26.11.2025**
(21) Anmeldenummer: 21205226.0
(22) Anmeldetag: 28.10.2021
(51) Int. Cl.: G01G 19/03, G01G 23/16, G01G 15/00

(54) **VERFAHREN UND VORRICHTUNG ZUM NULLSTELLEN EINER WAAGE**
METHOD AND DEVICE FOR ZEROING A SCALES
PROCÉDÉ ET DISPOSITIF DE MISE À ZÉRO D'UNE BALANCE

(30) Priorität: 28.10.2020 DE 102020128350
(43) Veröffentlichungstag der Anmeldung: 04.05.2022
(73) Patentinhaber: WIPOTEC GmbH, 67657 Kaiserslautern (DE)
(72) Erfinder: Zinke, Bernd, 66399 Mandelbachtal (DE); Rothfuchs, Michael, 66885 Bedesbach (DE)
(74) Vertreter: Eder Schieschke & Partner mbB

(56) Entgegenhaltungen:
- US-A- 5 308 930

## Beschreibung

Die vorliegende Erfindung betrifft ein Verfahren und eine Vorrichtung zum Nullstellen einer Waage, wobei die Waage eine von einer Wägezelle getragene Wägeplattform umfasst. Nach diesem Verfahren werden einzelne Produkte einer Wägeplattform zugeführt, um deren Gewicht zu ermitteln. Anschließend werden sie von der Wägeplattform abgeführt. Jedes Produkt wird dabei in einem eigenen Wägezyklus gewogen. Wägezyklen von hintereinander geförderten Produkten können zeitlich unmittelbar aneinander anschließen oder durch andere Verfahrensschritte auch zueinander zeitlich beabstandet sein.

Für die Messgenauigkeit einer Waage ist der Nullpunkt, d.h. der Anzeigewert ohne Beaufschlagung der Wägeplattform mit einer zu messenden Last, von großer Bedeutung. Ist der Nullpunkt einer Waage nicht exakt genug festgelegt bzw. mit einem zu großen Fehler behaftet, dann wird beispielsweise ohne auf der Wägeplattform aufliegende Last ein Wert abweichend von Null angezeigt, oder trotz aufliegender Last wird der Wert Null ausgegeben (der Begriff der Wägeplattform soll auch Aufnahmemittel von unterflurigen Waagen mit einschließen, bei denen die zu wiegenden Lasten an diesen Aufnahmemitteln hängen und die zugehörige Wägezelle meist oberhalb der Aufnahmemittel angeordnet ist).

Daher ist es erforderlich, den Nullpunkt neu einzustellen ("Nullstellen" oder "Nullstell-Vorgang"), wenn bestimmte Kriterien dafür eintreten. Bei selbsttätig arbeitenden Waagen kann dies in zeitlich bestimmten Abständen automatisiert erfolgen, beispielsweise alle 15 Minuten. Alternativ oder ergänzend kann auch die Anzahl der vorgenommenen einzelnen Wiegevorgänge Kriterium für das Erfordernis des Nullstellens sein. Auch eine festgestellte Abweichung des Anzeigewerts von einem zu erwartenden Sollwert jenseits vorgebbarer Toleranzen kann ein solches Kriterium sein (Anzeige weicht beispielsweise in unbelastetem Zustand um mehr als 0,5 Eichwerte von Null ab).

Beim Nullstellen kann unterschieden werden zwischen der erfindungsgemäßen Nullstell-Funktion und einer Nullnachführungs-Funktion. Bei der Nullnachführungs-Funktion wird der Nullpunkt permanent in einer fortdauernden Programmschleife korrigiert (nachgeführt). Bei geeichten Waagen bestehen gesetzliche Vorgaben, nach denen bei der Nullnachführungs-Funktion beispielsweise eine Korrektur von maximal einem halben Eichwert pro Sekunde (Nachführ-Geschwindigkeit) zulässig ist. Durch diesen Parameter wird eine relativ starke Nachführung des Nullpunkts innerhalb kurzer Zeit bzw. weniger Schritte verhindert. Darüber hinaus darf sich der Nullpunkt insgesamt nur um maximal vier Prozent des Wägebereichs der Waage verändern. Aufgrund der limitierten Nachführgeschwindigkeit kann dieser Maximalwert jedoch nicht sofort, sondern allenfalls im Rahmen des zugelassenen Parameters erreicht werden, wodurch das Risiko eines fehlerhaft ermittelten neuen Nullpunkts klein gehalten wird.

Anders ist dies bei der Nullstell-Funktion. Hier lassen die gesetzlichen Vorgaben auch innerhalb eines einzigen Korrekturschrittes eine Veränderung des Nullpunkts um bis zu 4% des Wägebereichs zu. Eine typische Anwendung für die Nullstell-Funktion betrifft den Fall, dass beispielsweise loses Schüttgut aus einer zu wiegenden Verpackung austritt und auf der Wägeplattform verbleibt. Dieser Fehlbetrag muss für den nachfolgenden Behälter im anschließenden Wiegevorgang sofort vollständig berücksichtigt werden. Dafür genügt bereits eine einzige Nullstell-Funktion (innerhalb der zulässigen Nullpunktänderung von bspw. 4%), so dass unmittelbar anschließend mit einem gegebenenfalls deutlich veränderten neuen Nullpunkt gewogen werden kann. Die Nullnachführungs-Funktion dagegen lässt dies durch die Beschränkung der Nachführungsgeschwindigkeit nicht zu und könnte nicht mehr arbeiten.

Besonders vorteilhaft wäre es, wenn vor jedem einzelnen Wiegevorgang eine Nullstell-Funktion durchgeführt werden könnte. Dazu könnte als Aktivierung für die selbstständige Nullstell-Funktion das Signal einer stromaufwärts der Wägeplattform angeordneten Lichtschranke verwendet werden. Erreicht ein zu wiegendes Produkt diese Lichtschranke, wird die Nullstell-Funktion ausgelöst. Für das Produkt ist der unmittelbar vor dem Wiegevorgang festgelegte Nullpunkt besonders genau. Die Nullstell-Funktion benötigt jedoch eine gewisse Zeit, meist mehrere 100 Millisekunden. Bis zum Ablauf dieser Zeit darf das Produkt die Wägeplattform der Waage noch nicht erreichen und belasten, d.h. zwischen dem Sensor und der Wägeplattform muss ein entsprechend ausreichender Abstand sein, der insbesondere von der Fördergeschwindigkeit abhängt.

Zugleich muss der Abstand zwischen zwei aufeinanderfolgenden Produkten so groß sein, dass das nachfolgende Produkt eine Nullstell-Funktion nicht auslöst, bevor die vom vorausgegangenen Produkt ausgelöste Nullstell-Funktion erfolgreich abgeschlossen wurde. Bei schnell aufeinanderfolgenden Produkten - etwa bei Erhöhung der Fördergeschwindigkeit - kann das zwischen zwei Produkten verbleibende Zeitfenster (Lücke) für eine komplette Nullstell-Funktion zu klein sein und nur geschaffen werden durch nachteilige Reduzierung der Fördergeschwindigkeit bzw. des Produktdurchsatzes. Der Abstand zwischen zwei aufeinanderfolgenden Produkten könnte gelegentlich bewusst vergrößert werden, indem gezielt eine ausreichend große Lücke im Produktstrom erzeugt wird. Allerdings kann der Sensor (und eine damit verbundene Steuerung) das Eintreffen der Lücke als solche stromaufwärts der Waage erst "erkennen", nachdem der sonst übliche zeitliche Abstand zwischen zwei regulär aufeinander folgenden Produkten überschritten ist, so dass die bis dann bereits verstrichene Zeit nicht für die Nullstell-Funktion genutzt werden kann. Um dies zu vermeiden, müsste der Zeitpunkt des Eintreffens der Lücke an der Waage vorausberechnet werden. Dieser Zeitpunkt kann jedoch nur dann genau genug vorbestimmt werden, wenn die Lücke stromaufwärts der Wägeplattform nach Ort und Fördergeschwindigkeit bekannt ist und auch für unterschiedliche Produkte nicht verändert wird. Manchmal verändert der Betreiber der Produktionsanlage aber auch die Position der Waage entlang des Förderweges durch den Produktionsprozess, so dass nach jeder Ortsveränderung der Waage wertvolle Produktionszeit verbraucht wird für die erneute Parametrisierung und Freigabetests der Anlage.

Bei einer Nullstell-Funktion, die durch einen stromaufwärts der Wägeplattform angebrachten Sensor initiiert werden soll, löst auch die Schaffung der "Lücke" nicht das Problem, dass der Abstand zwischen stromaufwärtigem Sensor und Wägeplattform je nach Fördergeschwindigkeit zu kurz sein kann, um eine von diesem Sensor ausgelöste Nullstell-Funktion rechtzeitig erfolgreich abzuschließen.

Aus der US 5 308 930 A ist eine selbsttätige Waage bekannt, bei welcher der Startzeitpunkt für eine Nullstellfunktion anhand eines stromaufwärtigen Detektors und unter Berücksichtigung der Fördergeschwindigkeit errechnet wird. Ein zeitsparender Umgang mit bereits laufenden Nullstellfunktionen ist aus dieser Schrift jedoch nicht zu entnehmen.

Aufgabe der Erfindung war es daher, ein Verfahren und eine Vorrichtung anzubieten, um das automatische Nullstellen einer selbsttätigen Waage auf einfache Weise zu verbessern, und zuverlässiger, weil unabhängiger von äußeren Umstanden, zu gestalten.

Die Aufgabe wird gelöst durch ein Verfahren nach Anspruch 1 und eine Waage nach Anspruch 11.

Der Erfindung liegt die Idee zugrunde, dass eine Nullstell-Funktion bevorzugt dann selbsttätig ausgelöst werden kann, wenn ein Produkt die Wägeplattform verlässt. In erfinderischer Weise wird dabei zunächst fiktiv davon ausgegangen, dass sich im Produktstrom jedes Mal ein für das Nullstellen ausreichend großes Zeitfenster ergibt, sobald ein Produkt am Ende eines Wiegevorgangs die Wägeplattform verlassen hat. Unter dieser Annahme kann die Nullstell-Funktion automatisch am Ende eines jeden Wiegevorgangs eingeleitet werden. Anders als wenn das Eintreffen des Produkts an einer Position stromaufwärts der Wägeplattform als Signal für das Einleiten der Nullstell-Funktion herangezogen wird, markiert das Eintreffen des Produkts an der stromabwärtigen Sollposition unmittelbar den Beginn des Zeitfensters bzw. des Zeitpunktes, an dem die Wägeplattform unbelastet ist, so dass die Nullstell-Funktion auch unmittelbar eingeleitet werden kann. Unter Nutzung des stromaufwärtigen Sensors wird die Nullstell-Funktion dagegen erst dann ausgelöst, wenn sich ein nachfolgendes Produkt der Wägeplattform bereits wieder nähert und dabei den stromaufwärtigen Sensor erreicht.

Die Zeit zwischen dem Moment, in dem ein vorausgehendes Produkt die Wägeplattform verlässt und dem Moment, in dem das nachfolgende Produkt den stromaufwärtigen Sensor erreicht, kann daher durch die erfindungsgemäße Verfahrensführung für die Nullstell-Funktion voll genutzt werden.

Anders als bei einer Nullnachführungs-Funktion, die üblicherweise permanent in aufeinanderfolgenden Zyklen und ohne ein jeden Zyklus jeweils auslösendes physisches Ereignis erfolgt, ist die erfindungsgemäße Nullstell-Funktion eine selbsttätige, ereignisgetriggerte, automatische Funktion, die während des Normalbetriebs der Waage ausgeführt wird. Das auslösende Ereignis ist hier erfindungsgemäß dadurch gegeben, dass das zuletzt auf die Wägeplattform geförderte, insbesondere gewogene Produkt die Wägeplattform verlassen hat und die Wägeplattform von zu fördernden diskreten Produkten unbelastet ist.

Das erfindungsgemäße Verfahren ermöglicht es, die zuvor beschriebene, für die Durchführung einer Nullstell-Funktion geeignete Lücke sicher und zeitoptimiert "einzufangen". Dies geschieht unabhängig von einer möglicherweise veränderten Anordnung der Waage entlang der Fertigungsstrecke in der Anlage, denn die Größe und das Eintreffen der Lücke an der Wägeplattform müssen nicht von einer übergeordneten Anlagensteuerung ermittelt und an die Waagensteuerung übermittelt werden. Stattdessen kann dies entweder innerhalb der Waage geschehen oder sogar ganz entfallen, wenn ein stromabwärtiger Sensor für die Auslösung der Nullstell-Funktion verwendet wird. Die Waage wird dadurch bezüglich des Nullstellens autark.

Erfindungsgemäß ist weiterhin vorgesehen, dass die Nullstell-Funktion selbsttätig abgebrochen und verworfen wird, wenn ein nachfolgendes Produkt die Wägeplattform erreicht, bevor die Nullstell-Funktion erfolgreich abgeschlossen wurde. Dazu kann beispielsweise ein stromaufwärts der Wägeplattform angeordneter Sensor oder das Wägesignal der Wägezelle selbst ausgewertet werden.

Allerdings ist die Wägezelle (bzw. deren gewichtsbezogenes Wägesignal) nicht dazu geeignet, das Verlassen der Wägeplattform durch das Produkt zu detektieren, um die Nullstell-Funktion auszulösen. Das Wägesignal wird nach dem Herunterfahren eines Produkts von der Wägeplattform nämlich noch einige Zeit nachschwingen, so dass ein definiertes Signal für das Verlassen der Wägeplattform nur unzureichend genau aus dem Wägesignal generiert werden kann.

Erfindungsgemäß wird durch jedes die Wägeplattform verlassende Produkt eine Nullstell-Funktion gestartet, wenn die Wägeplattform in diesem Moment nicht von weiteren diskreten Produkten belastet ist. Erreicht ein nachfolgendes Produkt die Wägeplattform vor dem erfolgreichen Abschluss der Nullstell-Funktion, so wird die momentan ausgeführte Nullstell-Funktion abgebrochen und verworfen, so dass in diesem Fall kein neuer Nullpunkt gesetzt bzw. definiert wird ("erfolgreich" ist eine Nullstellfunktion dann, wenn ein neuer Nullpunkt festgelegt wurde). Sobald dieses nachfolgende Produkt seinerseits die Wägeplattform verlässt, wird erneut eine Nullstell-Funktion ausgelöst. Haben zwei aufeinanderfolgende Produkte hingegen zwischen sich einen ausreichend großen Abstand (Lücke), der einem ausreichend großen Zeitfenster entspricht für eine vollständige Nullstell-Funktion, so kann dieses Zeitfenster vollständig bzw. von Beginn an, nämlich mit dem Verlassen der Wägeplattform durch das vordere Produkt, genutzt werden.

Die Wägeplattform gilt im Sinne der vorliegenden Erfindung dann als *"von zu fördernden diskreten Produkten unbelastet",* wenn keine solchen Produkte auf der Wägeplattform aufliegen, die dazu bestimmt sind, die Wägeplattform im regulären Betrieb - zum Beispiel innerhalb oder zum Abschluss eines Wägezyklus - wieder zu verlassen, etwa indem sie von der Wägeplattform heruntergefördert werden. Unter idealisierten Betriebsbedingungen kann davon ausgegangen werden, dass nur die zu wiegenden, diskreten Produkte auf die Wägeplattform herauf- und anschließend von ihr wieder heruntergefördert werden. Eine Nullstell-Funktion kann dabei immer dann ausgeführt werden, wenn keines der zu wiegenden und weiterzufördernden Produkte die Wägeplattform belastet.

Das betrifft auch solche weiterzufördernden Produkte, deren Gewicht möglicherweise deutlich vom Gewicht anderer zu fördernder Produkte abweicht, und beispielsweise in der Größenordnung von nur wenigen Eichwerten der Waage liegt. Da auch ein solches Produkt im regulären Betrieb von der Wägeplattform wieder heruntergefördert wird, darf dessen (geringes) Gewicht nicht in Folge einer versehentlichen Nullstell-Funktion mit den Gewichtswerten von den nachfolgend zu wiegenden Produkten verrechnet werden. Um sicherzustellen, dass auch solche (leichten) Produkte die Wägeplattform vor Beginn jeder Nullstell-Funktion verlassen haben, ist es denkbar, mit Bilderkennungsmitteln oder sonstigen geeigneten Sensoren das Auf- und Ablaufen der Produkte auf die bzw. von der Wägeplattform zu überwachen.

Das schließt jedoch nicht aus, dass die Plattform auch dann eine Gewichtskraft erfährt, wenn die eigentlich zu wiegenden und zu fördernden diskreten Produkte nicht auf ihr aufliegen. Beispielsweise könnte es sich bei den diskreten Produkten um Zementsäcke handeln. Gelangen Reste von losem Zement aus den Säcken auf die Wägeplattform und bleiben dort liegen, so verfälscht dies den gemessenen Gewichtswert der anschließend gewogenen und weitergeförderten Zementsäcke. Eine Nullstell-Funktion (während der gemäß diesem Beispiel lediglich Zementreste auf der Wägeplattform aufliegen) gewährleistet dagegen, dass im Anschluss tatsächlich nur das Gewicht des zusätzlich auf die Wägeplattform aufgebrachten Zementsacks gewogen wird, während die unverändert auf der Wägeplattform aufliegenden Zementreste nicht mehr erfasst werden. Hierdurch kann ein Produktionsstop zu Reinigungszwecken vorteilhaft vermieden werden.

Das erfindungsgemäße Verfahren soll ausgeführt werden, wenn ein Produkt die Wägeplattform verlassen hat (vorzugsweise, nachdem es dort zuvor gewogen wurde). Dabei ist die Auslösung der Nullstell-Funktion erfindungsgemäß unmittelbar an einen Wägezyklus gekoppelt bzw. ein Bestandteil desselben. Sie wird zum Abschluss jedes Wägezyklus automatisch initiiert, bevorzugt sobald die Wägeplattform nicht mehr von einem zu fördernden, diskreten Produkt belastet ist. Dadurch wird die zur Verfügung stehende Zeit bis zum Eintreffen des nachfolgenden Produkts auf der Wägeplattform bestmöglich für den Nullstell-Vorgang genutzt.

Dieser Zustand wird vorzugsweise ermittelt mithilfe einer vorgebbaren Sollposition (x_{T}) stromabwärts der Wägeplattform und unter Ermittlung des Zeitpunkts, zu dem das Produkt diese Sollposition erreicht. Als Sollposition wird diejenige Position des Produkts entlang des Förderweges gewählt, an der das Produkt die Wägeplattform verlassen hat. Bevorzugt wird dieser Zustand so schnell wie möglich erkannt, um wertvolle Zeit für die Nullstell-Funktion nutzen zu können. Vorzugsweise liegt die Sollposition daher möglichst nahe hinter dem stromabwärtigen Ende der Wägeplattform. Dabei ist zu berücksichtigen, wie das Eintreffen des Produktes an der Sollposition bestimmt werden soll, so dass die Sollposition auf verschiedene Weise definiert bzw. festgelegt werden kann.

Zunächst wird vorausgesetzt, dass ein zu wiegendes Produkt ein in Förderrichtung gesehen vorderes Ende als Vorderflanke und ein rückwärtiges Ende als Rückflanke aufweist. Als Vorderflanke ist somit derjenige Abschnitt des Produkts (Spitze, Kante, Stirnfläche etc.) zu verstehen, der in Förderrichtung gesehen am weitesten vorausragt, und bei der Förderung beispielsweise die Wägeplattform als erster erreicht oder verlässt. Entsprechend wird die Rückflanke gebildet von demjenigen Abschnitt des Produkts, der in Förderrichtung am weitesten zurückliegt und beispielsweise die Wägeplattform als letzter erreicht oder verlässt. Immer dann, wenn die Rückflanke eines Produkts die Wägeplattform verlassen hat, ist davon auszugehen, dass die Wägeplattform zunächst unbelastet ist und für eine Nullstell-Funktion grundsätzlich bereit ist.

Eine Vorderflanke oder Rückflanke lässt sich insbesondere mit einer Lichtschranke gut erfassen, die vorzugsweise quer zur Förderrichtung gerichtet ist. Eine solche Lichtschranke als Sensor kann erfassen, ob eine Vorderflanke am Sensor eintrifft oder eine Rückflanke den Sensor verlässt (Lichtschranke wird unterbrochen oder freigegeben). Bei ungleichmäßig geformten Produkten können auch mehrere Sensoren vorgesehen sein, um eine Flanke des Produkts sicher erfassen zu können. Anstelle von Lichtschranken können auch andere, dem Fachmann bekannte Arten der Positionserfassung verwendet werden.

Vorzugsweise definiert die Sollposition (x_{T}) diejenige Position stromabwärts der Wägeplattform, an der entweder die Vorderflanke oder die Rückflanke des Produkts so weit von der Wägeplattform entfernt ist, dass das Produkt die Wägeplattform sicher verlassen hat. Erreicht die Vorderflanke die Sollposition, so hat das Produkt dann die Wägeplattform vollständig verlassen, wenn die Sollposition mindestens im Abstand einer Produktlänge stromabwärts der Wägeplattform festgelegt wurde. Erreicht die Rückflanke die Sollposition, so ergibt sich unmittelbar, dass das Produkt die Wägeplattform verlassen haben muss.

Das Erreichen der Sollposition kann mithilfe wenigstens eines Sensors erfasst werden, wobei dieser Sensor nicht zwingend an der Sollposition angeordnet sein muss. Grundsätzlich kann sich der Sensor unmittelbar an der Sollposition oder an einer beliebigen Sensorposition (x) stromaufwärts der Sollposition befinden in Abhängigkeit davon, welche Flanke zur Ermittlung des Zeitpunkts T erfasst und ausgewertet werden soll.
a) Ein stromaufwärts der Sollposition angeordneter Sensor (beispielsweise an einer Sensorposition stromaufwärts oder entlang der Wägeplattform) kann erfassen, ob eine Vorderflanke am Sensor eintrifft oder eine Rückflanke den Sensor verlässt. Wird die Rückflanke durch den Sensor erfasst und ausgewertet, kann in Kenntnis der Fördergeschwindigkeit der Zeitpunkt errechnet werden, an dem die Rückflanke die Sollposition stromabwärts der Wägeplattform erreicht und die Wägeplattform für die Nullstell-Funktion bereit ist. Wird hingegen die Vorderflanke durch den Sensor erfasst und ausgewertet, ist neben der Fördergeschwindigkeit auch die Produktlänge in Förderrichtung zu berücksichtigen, um den Zeitpunkt ermitteln zu können, zu dem die Rückflanke die Wägeplattform verlassen haben wird.
b) Besonders bevorzugt wird der wenigstens eine Sensor unmittelbar an der stromabwärts der Wägeplattform festgelegten Sollposition (x_{T}) angeordnet bzw. so eingestellt, dass er das Eintreffen einer Vorderflanke oder Rückflanke an der Sollposition erfasst. Ist der Sensor beispielsweise zur Erfassung und Auswertung der Vorderflanke des Produkts vorgesehen, und ist die Sollposition mindestens um eine Produktlänge (und damit ausreichend weit) von der Wägeplattform beabstandet, kann das detektierte Eintreffen der Vorderflanke an der Sollposition unmittelbar zur Einleitung der Nullstell-Funktion verwendet werden. Liegt die Sollposition näher an der Wägeplattform, so kann unter Berücksichtigung der Fördergeschwindigkeit und der Produktlänge errechnet werden, wann das Produkt die Wägeplattform vollständig verlassen hat, um dann die Nullstell-Funktion einzuleiten.
   Höchst bevorzugt wird der an der Sollposition angeordnete Sensor jedoch zur Erfassung und Auswertung der Rückflanke des Produkts verwendet. In diesem Fall spielt vorteilhaft weder die Fördergeschwindigkeit noch die Produktlänge eine Rolle für die Auslösung der Nullstell-Funktion, so dass das Signal des Sensors ohne die Berücksichtigung weiterer Parameter (und deren dazu erforderliche Hinterlegung bzw. Erfassung) unmittelbar zur Auslösung der Nullstell-Funktion verwendet werden kann. Daher eignet sich diese Variante besonders gut auch bei Produktionsprozessen, bei denen Produkte mit wechselnden Längen verarbeitet werden oder mit geänderten oder sogar auf Null reduzierten Fördergeschwindigkeiten (Start-Stop-Betrieb) zu rechnen ist.
c) Nach einer weiteren Ausführungsform des Verfahrens könnte der Sensor auch an einer Sensorposition stromabwärts der Sollposition angeordnet sein und dort das Eintreffen der Vorderflanke erfassen (das Erfassen der Rückflanke an dieser Stelle würde den Beginn der Nullstell-Funktion unnötig verzögern). Dazu müssen der Abstand zwischen Sensor und Sollposition, die Produktlänge sowie die Fördergeschwindigkeit bekannt sein, um das Erreichen der Sollposition durch die Rückflanke des Produkts ermitteln zu können.

Das erfindungsgemäße Verfahren lässt sich auch einsetzen beim Differenzwiegen. Dabei werden der Wägeplattform eine Reihe zu wiegender Produkte nacheinander zugeführt und in der gleichen Reihenfolge wieder von ihr abgeführt, wobei sich gleichzeitig auch mehrere Produkte auf der Wägeplattform befinden können. Das Gewicht eines bestimmten Produktes in dieser Reihe ergibt sich dann aus der Differenz der Belastung der Wägeplattform bevor und nachdem das jeweilige Produkt die Wägeplattform erreicht oder verlassen hat.

Bei der nachfolgenden Beschreibung der Erfindung ist von einzelnen diskreten Produkten die Rede, welche der Wägeplattform nacheinander zugeführt oder von ihr abgeführt werden, wobei stets nur ein Produkt die Wägeplattform belastet. Um die Erfindung auch für das Differenzwiegen zu erläutern, muss gedanklich lediglich das einzelne diskrete Produkt ersetzt werden durch die Reihe von Produkten, die beim Differenzwiegen über die Wägeplattform geführt werden. In diesem Fall erreicht bzw. verlässt ein "Produkt" im Sinne der vorliegenden Erfindung einen Sensor oder die Wägeplattform dann, wenn das erste bzw. letzte Produkt aus der Reihe den jeweiligen Sensor oder die Wägeplattform erreicht bzw. verlässt - die gesamte Reihe der Produkte ist dann als ein diskretes Produkt im Sinne der vorliegenden Erfindung zu verstehen.

Eine vorteilhafte Ausführungsform des Verfahrens sieht vor, dass zur Beendigung einer bereits laufenden Nullstell-Funktion ein Sensor stromaufwärts der Wägeplattform angeordnet ist. Der Sensor ist zur Erfassung der Vorderflanke oder der Rückflanke eines auf die Wägeplattform zu fördernden Produktes ausgebildet, um in Abhängigkeit davon (erforderlichenfalls unter Berücksichtigung der Fördergeschwindigkeit und/oder der Produktlänge und/oder der Länge der Lücke) eine zuvor gestartete Nullstell-Funktion vorzeitig abbrechen zu können. Dadurch wird sichergestellt, dass eine noch laufende Nullstell-Funktion nicht abgeschlossen wird, während ein nachfolgendes Produkt die Wägeplattform belasten würde oder bereits belastet und dadurch den Messwert beeinflussen würde, der für den Anzeigewert "Null" eine unbelastete Wägeplattform voraussetzt.

Ein stromaufwärts der Wägeplattform angeordneter Sensor kann alternativ oder ergänzend auch zur Bestimmung des Zeitpunkts T verwendet werden, um wie vorstehend beschrieben eine Nullstell-Funktion auslösen zu können. Nach einer vorteilhaften Ausführungsform der Erfindung kann das Erreichen eines stromaufwärtigen Sensors auch zur Auslösung einer Nullstell-Funktion vorgesehen sein, die zusätzlich zu derjenigen Nullstell-Funktion erfolgt, die erfindungsgemäß durch das die Wägeplattform verlassende Produkt ausgelöst wird. Diese Kombination führt dazu, dass zunächst jedes am stromaufwärtigen Sensor eintreffende Produkt eine Nullstell-Funktion auslösen kann, wenn die Zeit, in der das Produkt von diesem Sensor bis zur Wägeplattform gefördert wird, für die Nullstell-Funktion ausreicht (und unter der Voraussetzung, dass die Wägeplattform während der Nullstell-Funktion im Sinne der obigen Definition unbelastet ist). Verlässt das Produkt die Wägeplattform, löst es - unter den Bedingungen im Anspruch 1 - erfindungsgemäß erneut eine Nullstell-Funktion aus. Hierdurch löst das genannte Produkt zweimal die Nullstell-Funktion aus, nämlich wenn das Produkt vor oder beim Auflaufen auf die Wägeplattform erfasst wird und wenn es die Wägeplattform verlässt.

Ist die Lücke zwischen diesem Produkt und dem nächsten Produkt groß genug, so wird auch diese Nullstell-Funktion erfolgreich abgeschlossen werden, andernfalls nicht. Nach vorgebbaren Kriterien, die beispielsweise in einer Steuerung in Form von Parametern hinterlegbar sind, kann dann festgelegt werden, welche der beiden NullstellFunktionen (bzw. welcher der jeweils dabei ermittelten Nullpunkte) für den weiteren Betrieb der Waage zu Grunde gelegt werden soll.

Nach einer Ausführungsform der Erfindung kann der Abbruch einer Nullnachführungs-Funktion zur Initiierung der Nullstell-Funktion dienen, wenn die Kriterien gemäß Anspruch 1 Merkmal a) erfüllt sind. So wird sichergestellt, dass während des Waagenbetriebs zumindest ein Nullstell-Modus aktiviert ist. Das Rückschalten vom Modus "Nullstell-Funktion" in den Modus "Nullnachführungs-Funktion" kann zum Beispiel nach einer vorgegebenen Zeitspanne vorgenommen bzw. probiert werden. Dann kann nach einer weiteren Ausführungsform der Erfindung eine fortwährend wiederholte Nullnachführungs-Funktion in einer Wägezelle der Waage ablaufen, während die ereignisgetriggerte Nullstell-Funktion in einer von der Wägezelle getrennt ausgebildeten Steuereinheit abläuft. Dadurch wird die Programmausführung in der Steuereinheit zeitlich entlastet.

Eine erfindungsgemäße Waage ist zur Durchführung des vorbeschriebenen Verfahrens ausgebildet. Sie umfasst eine Wägeplattform und Mittel, um Produkte von der Wägeplattform herunterzufördern. Vorzugsweise ist die Waage auch dazu ausgebildet, die Produkte stromaufwärts der Wägeplattform aufzunehmen und auf die Wägeplattform zu fördern. Die Waage umfasst wenigstens einen Sensor, der dazu ausgebildet ist, festzustellen, ob ein Produkt die Wägeplattform verlassen hat, um in Abhängigkeit davon die Nullstell-Funktion auszulösen. Vorzugsweise ist der Sensor zur Erfassung der Vorderflanke und/oder Rückflanke eines von der Waage geförderten Produkts ausgebildet, und dessen Signal ist zur Ermittlung desjenigen Zeitpunkts verarbeitbar, an dem das Produkt die vorgebbare Sollposition (x_{T}) stromabwärts der Wägeplattform erreicht. Zweckmäßigerweise ist die Waage zur Durchführung der Nullstell-Funktion ausgebildet.

Vorzugsweise umfasst die Waage auch eine Steuereinheit, der die Signale des wenigstens einen Sensors zuführbar sind, und die zur Durchführung einer Nullstell-Funktion ausgebildet ist. Die Steuereinheit kann auch zur Ansteuerung eines Antriebs vorgesehen sein, mit dem die Produkte gefördert werden. Vorzugsweise umfasst die Steuereinheit auch einen Speicher, in dem Betriebsparameter vorübergehend oder dauerhaft hinterlegt und bei Bedarf abgerufen werden können. Zu diesen Betriebsparametern kann die Länge der zu fördernden Produkte in Förderrichtung gehören und auch die Fördergeschwindigkeit, die auch mittels eines Encoders erfasst und in Signalform an die Steuereinheit übermittelt werden kann. Die Steuereinheit ist vorzugsweise ausgebildet zur drahtgebundenen oder kabellosen Signalübertragung an andere Datenverarbeitungsgeräte, zu denen eine übergeordnete Steuereinheit, eine Anzeigevorrichtung, ein Datenspeicher oder ein Drucker gehören können.

Ein insbesondere stromaufwärts der Wägeplattform angeordneter Sensor kann vorteilhaft zur Ein- und Abschaltung einer automatischen Nullnachführung verwendet werden. Wie vorstehend beschrieben wurde, erfolgt in einer Nullnachführungs-Funktion eine permanente Korrektur des Nullpunktes in kleinen Schritten. Zur Erfassung des Nullpunkts darf sich dabei kein Produkt auf der Wägeplattform befinden. Grundsätzlich wäre es möglich, diesen Zustand durch Auswertung des von der Wägezelle ausgegebenen Gewichtssignals zu überprüfen (Gewichtstrigger). Problematisch ist dabei, dass Produkte mit sehr geringem Gewicht unterhalb des festgelegten Schwellwertes (von z.B. einem Eichwert 1e) liegen könnten, der von der Waagensteuerung noch als Produkt interpretiert würde. Als Folge würde das geringe Gewicht des nicht erkannten Produkts fälschlicherweise und unbemerkt zur Bildung des neuen Nullpunktes herangezogen werden. Zum Beispiel würde bei einer Paketwaage mit Eichwert e = 50 g ein Brief von 20g Gewicht nicht als Produkt erkannt werden.

Ein Aspekt der vorliegenden Anmeldung ist daher auf ein Verfahren und eine zu dessen Durchführung ausgebildete Vorrichtung gerichtet, wobei ein insbesondere stromaufwärts der Wägeplattform angeordneter Sensor dazu zu verwendet wird, eine Nullnachführungs-Funktion spätestens dann zu deaktivieren, wenn ein Produkt die Wägeplattform erreicht. Die Prüfung, ob ein Produkt die Wägeplattform belastet oder belasten wird und daher die Nullnachführungs-Funktion abgebrochen werden muss, erfolgt somit nicht durch Auswertung des Wägesignals, sondern mit anderen physikalischen Mitteln, welche die Präsenz des Produktes unabhängig von dessen Gewicht, insbesondere optisch oder haptisch, erfassen können. Dadurch wird sichergestellt, dass jedes Produkt (auch eines mit sehr geringem Gewicht) sicher erfasst und für die Steuerung der Nullnachführungs-Funktion berücksichtigt werden kann. Diese Aktivierung oder Deaktivierung der Nullnachführungs-Funktion mithilfe eines stromaufwärts der Wägeplattfrom angeordneten Sensors könnte auch unabhängig von einer ereignisgetriggerten Nullstell-Funktion nach Anspruch 1 ablaufen.

Wie vorstehend unter a) beschrieben ist, kann der stromaufwärtige Sensor beispielsweise eine Vorderflanke oder eine Rückflanke des Produkts erfassen. In Kenntnis der Fördergeschwindigkeit (Erfassung der Vorderflanke) oder ergänzend in Kenntnis der Produktlänge in Förderrichtung (Erfassung der Rückflanke) kann der Zeitpunkt errechnet werden, an dem das Produkt die Wägeplattform erreicht, so dass spätestens zu diesem Zeitpunkt eine laufende Nullnachführungs-Funktion deaktiviert werden kann. Die automatische Nullnachführungs-Funktion könnte nach einem solchen Abbruch beispielsweise (analog zur Nullstell-Funktion) wieder aktiviert werden, nachdem mit geeigneten, vorstehend hauptsächlich für die Nullstell-Funktion beschriebenen Mitteln (beispielsweise mit einem stromabwärts der Wägeplatte angeordneten weiteren Sensor) detektiert wurde, dass die Wägeplattform nicht von einem Produkt beaufschlagt wird.

Bei den in dieser Anmeldung genannten Sensoren kann es sich um berührungslos arbeitende Sensoren (insbesondere Lichtschranken, Bilderkennungsmittel, Röntgensysteme, Magnetsysteme oder induktive und kapazitive Sensoren) oder auch kontaktierende Sensoren (insbesondere vom Produkt beaufschlagte Taster) handeln.

Nachfolgend soll eine Ausführungsform der Erfindung anhand eines Figurenbeispiels näher erläutert werden.

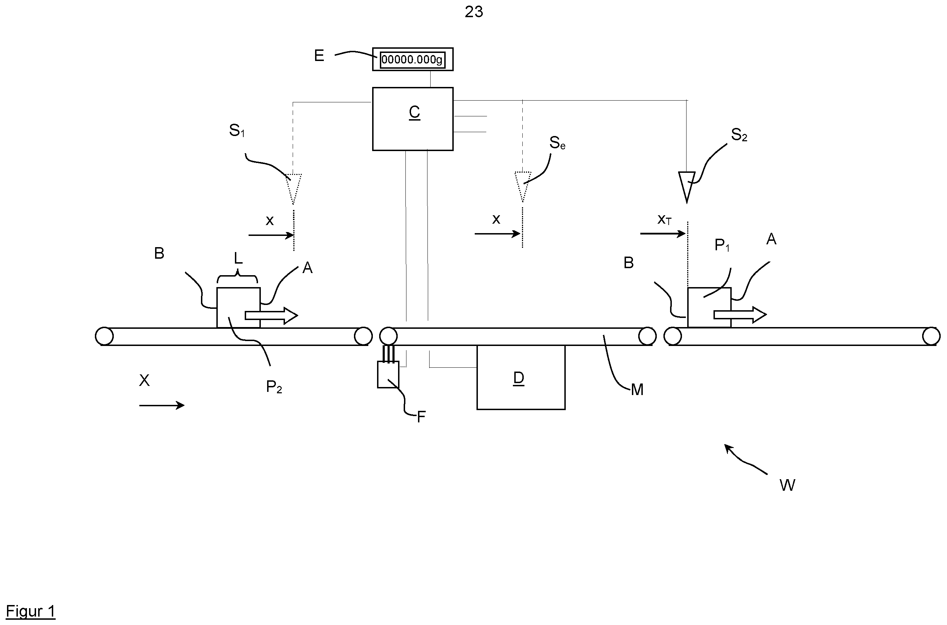

Die einzige Figur 1 zeigt in schematischer Seitenansicht eine erfindungsgemäße Waage W, die in den Produktionsprozess einzelner Produkte P₁, P₂ (allgemein P) eingebunden ist. Um das Gewicht der Produkte P zu erfassen, werden diese der Waage an einem stromaufwärtigen Ende nacheinander in einer Förderrichtung X (in Figur 1 von links nach rechts) zugeführt, und nach dem Wiegevorgang an einem stromabwärtigen Ende abgeführt. Die dazu erforderlichen Fördermittel stromaufwärts und stromabwärts der Wägeplattform sind in Figur 1 nur angedeutet und nicht näher bezeichnet.

Die Waage W umfasst eine Wägeplattform M, die auf einer Wägezelle D aufsitzt. Die Wägeplattform M ist als Bandförderer ausgebildet und über einen Motor F antreibbar. Mithilfe der Wägeplattform M sind die einzelnen Produkte P über die Wägeplattform M förderbar, um währenddessen deren Gewicht mittels der Wägezelle D zu erfassen.

Die zu wiegenden Produkte weisen an ihrem in Förderrichtung gesehen vorderen Ende eine Vorderflanke A und an ihrem rückwärtigen Ende eine Rückflanke B auf. Die Produktlänge L entspricht daher dem Abstand zwischen Vorderflanke A und Rückflanke B, gesehen in Förderrichtung X. Stromabwärts der Wägeplattform M ist an einer Sollposition x_{T} ein Sensor S₂ angeordnet, um die Rückflanke B eines von der Wägeplattform M heruntergeförderten Produktes P zu erfassen. Bei dem Sensor S₂ handelt es sich vorzugsweise um eine Lichtschranke. Eine Steuereinheit C ist zur Erfassung der von dem Sensor S₂ übermittelten Signale ausgebildet. Die Steuereinheit C ist auch mit der Wägezelle D und dem Motor F sowie einem nicht gezeigten Encoder verbunden und steuert außerdem die Ausgabe eines Gewichtswerts auf einer Anzeige E sowie Nullstell-Vorgänge. Alternativ kann der Sensor direkt an der Wägezelle angeschlossen sein und die Nullstell-Funktion direkt in der insbesondere intelligenten bzw. digitalen Wägezelle ablaufen.

Das erfindungsgemäße Verfahren läuft folgendermaßen ab:
Ein von der Wägeplattform gefördertes Produkt P₁ verlässt nach dem Wiegevorgang die Wägeplattform M. Dabei erreicht es mit seiner Rückflanke B die Sollposition x_{T}, was von dem Sensor S₂ erfasst und der Steuereinheit C signalisiert wird. Da zu diesem Zeitpunkt die Wägeplattform M nicht belastet ist (ein ausreichend großer Abstand zwischen aufeinanderfolgenden Produkten P₁, P₂ wird hier zunächst vorausgesetzt), kann die Steuereinheit C eine Nullstell-Funktion auslösen, um bei unbelasteter Wägeplattform M den zugehörigen Anzeigewert auf "Null" zu setzen. Bevorzugt ist die Nullstell-Funktion abgeschlossen, bevor das nächste Produkt P₂ die Wägeplattform M erreicht. Dieses nächste Produkt P₂ kann anschließend gewogen werden. Eine weitere Nullstell-Funktion kann wieder gestartet werden, wenn die Rückflanke B des nächsten Produktes P₂ die Sollposition x_{T} stromabwärts der Wägeplattform M erreicht.

Das erfindungsgemäße Verfahren gestattet es, den zur Verfügung stehenden Zeitraum zwischen zwei aufeinanderfolgenden Produkten ("Lücke") unmittelbar ab dem Zeitpunkt für eine Nullstell-Funktion zu nutzen, an dem das vordere Produkt die Wägeplattform verlassen bzw. mit einer Flanke (A oder B) eine Sollposition x_{T} erreicht hat, die diesen Zustand abbildet. Die Nullstell-Funktion kann dann sofort beginnen (bei Bedarf kann ein zusätzlicher zeitlicher Puffer vorgesehen sein, um das Einschwingen der Wägeplattform M bzw. der Wägezelle D in den unbelasteten Zustand abzuwarten und sicherzustellen).

Um das Eintreffen eines Produktes (genauer: das Eintreffen seiner Vorderflanke A oder Rückflanke B) an der Sollposition zu ermitteln, muss ein dazu verwendeter Sensor nicht zwingend an der Sollposition x_{T} angeordnet sein. Stattdessen ist es möglich, einen stromaufwärts der Wägeplattform vorgesehenen Sensor S₁ oder auch einen entlang der Wägeplattform M angeordneten Sensor Sₑ dazu auszuwerten, der mit der Steuereinheit verbunden ist. Auch mit einem solchen Sensor kann der Zeitpunkt T ermittelt werden, zu dem das Produkt mit seiner Rückflanke B die Wägeplattform M verlassen haben wird, um die Nullstell-Funktion zu starten. Beispielsweise könnte ein stromaufwärts der Wägeplattform an einer Sensorposition x angeordneter Sensor S₁ zur Erfassung beispielsweise der Vorderflanke A eines Produktes P vorgesehen sein. Die Zeit, die das Produkt ab diesem Moment benötigt, um mit seiner Rückflanke B die Wägeplattform verlassen zu haben, ergibt sich aus dem Abstand zwischen Sensorposition x und Sollposition x_{T}, der Fördergeschwindigkeit, der Produktlänge L und gegebenenfalls einer Förderpause, falls das Produkt mit reduzierter Geschwindigkeit oder unbewegt gewogen werden soll.

Gleichzeitig oder alternativ könnte der Sensor S₁ auch dazu verwendet werden, eine noch laufende Nullstell-Funktion oder Nullnachführungs-Funktion erfindungsgemäß abzubrechen und zu verwerfen, wenn ein nachfolgendes Produkt die Wägeplattform oder auch den Sensor S₁ selbst vorzeitig erreicht. Es ist nämlich denkbar und sogar wahrscheinlich, dass der Abstand zweier aufeinanderfolgender Produkte häufig nicht ausreicht, um dazwischen eine Nullstell-Funktion durchzuführen. Wird durch diesen Sensor S₁ stromaufwärts der Wägeplattform M das Eintreffen eines nachfolgenden Produktes P₂ an der Sensorposition x stromaufwärts der Wägeplattform M erkannt, während eine vom vorausgehenden Produkt P₁ ausgelöste Nullstell-Funktion noch läuft, so kann dieser Vorgang abgebrochen werden. In diesem Fall wird das nachfolgende Produkt P₂ gewogen, ohne dass nach dem vorherigen Produkt eine Nullstell-Funktion erfolgreich durchgeführt wurde. Die Erfindung basiert dann also darauf, dass bewusst eine hohe Abbrecherquote in Kauf genommen wird, um im Gegenzug jede ausreichend lange Lücke sicher zu "fangen".

### Bezugszeichen

- A: Vorderflanke
- B: Rückflanke
- C: Steuereinheit
- D: Wägezelle
- E: Anzeige
- F: Motor
- L: Produktlänge
- M: Wägeplattform
- P: Produkt
- S₁: Sensor
- S₂: Sensor
- Sₑ: Sensor entlang der Wägeplattform
- T: Zeitpunkt
- W: Waage
- X: Förderrichtung
- x: Sensorposition
- x_{T}: Sollposition

## Patentansprüche

1. Verfahren zum automatischen Nullstellen einer Waage (W), insbesondere einer selbsttätigen Waage (W), die Waage umfassend eine von einer Wägezelle (D) getragene Wägeplattform (M), wobei der Wägeplattform (M) in einer Förderrichtung (X) diskrete Produkte (P₁, P₂...) zugeführt werden, die in aufeinanderfolgenden Wägezyklen einzeln gewogen werden,
**dadurch gekennzeichnet,**
a) **dass** durch jedes zu wiegende Produkt (P₁, P₂...) am Ende des jeweiligen Wägezyklus' eine Nullstell-Funktion selbsttätig ausgelöst wird, wenn das zuletzt auf die Wägeplattform geförderte, insbesondere gewogene Produkt (P₁) die Wägeplattform (M) verlassen hat und die Wägeplattform von zu fördernden diskreten Produkten unbelastet ist, und
b) **dass** die Nullstell-Funktion selbsttätig abgebrochen und verworfen wird, wenn ein nachfolgendes Produkt (P₂, P₃...) die Wägeplattform (M) erreicht, bevor die Nullstell-Funktion erfolgreich abgeschlossen wurde.

2. Verfahren nach Anspruch 1, **dadurch gekennzeichnet, dass** zwei unmittelbar aufeinander folgend dem Wägeband zugeführte Produkte (P₁, P₂...) zwischen sich eine Lücke bilden, und die Nullstell-Funktion ausgelöst wird, sobald das vordere Ende der Lücke die Wägeplattform verlassen hat.

3. Verfahren nach Anspruch 1 oder 2, wobei jedes Produkt (P) ein vorderes Ende als Vorderflanke (A) und ein rückwärtiges Ende als Rückflanke (B) aufweist, das Verfahren umfassend folgende Schritte:
a) Förderung des Produktes (P) in Förderrichtung (X);
b) Ermitteln des Zeitpunkts (T), zu dem die Vorderflanke (A) oder die Rückflanke (B) eine vorgebbare Sollposition (x_{T}) stromabwärts der Wägeplattform (M) erreicht;
c) Auslösen einer Nullstell-Funktion an der Waage (W) in Abhängigkeit des Zeitpunktes (T).

4. Verfahren nach Anspruch 3, **dadurch gekennzeichnet, dass** der Zeitpunkt (T) ermittelt wird mittels eines in Förderrichtung (X) gesehen
a) stromaufwärts der Wägeplattform (M) positionierten Sensors (S₁), oder
b) stromabwärts der Wägeplattform (M) positionierten Sensors (S₂), oder
c) entlang der Wägeplattform (M) positionierten Sensors (Sₑ),
wobei der Sensor (S₁, S₂, Sₑ) zur Ermittlung des Zeitpunktes (T)
i) die Vorderflanke (A) und/oder
ii) die Rückflanke (B)
erfasst.

5. Verfahren nach Anspruch 3 oder 4, **dadurch gekennzeichnet, dass** der Zeitpunkt (T) ermittelt wird unter Berücksichtigung der Produktlänge (L) und/oder der Fördergeschwindigkeit des Produktes (P) und/oder der Länge der Wägeplattform (M) in Förderrichtung und/oder Länge einer Lücke gemäß Anspruch 2.

6. Verfahren nach Anspruch 4, Merkmal b) und Merkmal ii).

7. Verfahren nach einem der vorigen Ansprüche, wobei ein stromaufwärts der Wägeplattform (M) positionierter Sensor (S₁) vorgesehen ist, und wobei die Erfassung einer Vorderflanke (A) des Produkts (P) durch diesen Sensor (S₁) eine bereits laufende Nullstell-Funktion sofort oder nach einer vorgebbaren Zeit beendet.

8. Verfahren nach einem der vorigen Ansprüche, wobei ein stromaufwärts der Wägeplattform (M) positionierter Sensor (S₁) vorgesehen ist, **dadurch gekennzeichnet, dass** eine Nullstell-Funktion ausgelöst wird, wenn der stromaufwärtige Sensor (S₁) eine Vorderflanke (A) des Produktes erfasst und zu diesem Zeitpunkt keine Nullstell-Funktion läuft.

9. Verfahren nach einem der vorigen Ansprüche, **dadurch gekennzeichnet, dass** eine Nullstell-Funktion nach Anspruch 1a) als Modus zugeschaltet wird, falls eine bis dahin aktive Nullnachführungs-Funktion nicht mehr arbeiten kann.

10. Verfahren nach einem der beiden vorhergehenden Ansprüche, **dadurch gekennzeichnet, dass** die Nullnachführungs-Funktion in einer insbesondere digitalen bzw. intelligenten Wägezelle der Waage (W) abläuft, während die Nullstell-Funktion in einer von der Wägezelle getrennt ausgebildeten Steuereinheit (C) abläuft.

11. Selbsttätige Waage (W) mit einer Wägeplattform (M), wobei die Waage (W) dazu ausgebildet ist, ein zu wiegendes Produkt (P) in einer Förderrichtung (X) auf die Wägeplattform (M) und von dieser herunter zu fördern, und wobei das Produkt (P) ein in Förderrichtung (X) gesehen vorderes Ende als Vorderflanke (A) und ein rückwärtiges Ende als Rückflanke (B) aufweist,
**dadurch gekennzeichnet,**
**dass** die Waage (W) zur Durchführung eines Verfahrens nach einem der vorigen Verfahrensansprüche ausgebildet ist.

12. Selbsttätige Waage (W) nach dem vorhergehenden Anspruch, **dadurch gekennzeichnet, dass** die Waage (W) wenigstens einen Sensor (S₁, S₂, Sₑ) aufweist, um die Vorderflanke (A) und/oder Rückflanke (B) eines in X-Richtung geförderten Produktes (P) an einer vorgebbaren Sensorposition (x) oder Sollposition (x_{T}) zu erfassen.

13. Selbsttätige Waage (W) nach dem vorhergehenden Anspruch für ein Verfahren nach Anspruch 3, **dadurch gekennzeichnet, dass** die vorgebbare Sollposition (x_{T}) stromabwärts der Wägeplattform (M) liegt.

14. Selbsttätige Waage (W) nach einem der Ansprüche 11-13, **dadurch gekennzeichnet, dass** die Waage dazu ausgebildet ist, den Zeitpunkt (T) zu ermitteln, zu dem die Vorderflanke (A) oder die Rückflanke (B) eines Produktes (P) die Sollposition erreicht (x_{T}).

15. Selbsttätige Waage (W) nach einem der Ansprüche 11-14, umfassend eine Steuereinheit (C), wobei die Steuereinheit (C) zur Erfassung und Verarbeitung von Signalen wenigstens eines Sensors (S₁, S₂, Se) und/oder zur Steuerung der Produktförderung und/oder zur Durchführung der Nullstell-Funktion ausgebildet ist.

## Claims

1. Method for automatically zeroing a weighing scale (W), in particular an automatic weighing scale (W), the weighing scale comprising a weighing platform (M) carried by a weighing cell (D), discrete products (P₁, P₂ ...) being supplied to the weighing platform (M) in a conveying direction (X), which discrete products are weighed individually in successive weighing cycles,
**characterized in that**
a) by means of each product to be weighed (P₁, P₂ ...), at the end of the relevant weighing cycle', a zeroing function is automatically triggered when the last product conveyed onto the weighing platform, in particular the weighed product (P₁), has left the weighing platform (M) and the weighing platform is not loaded with discrete products to be conveyed, and
b) the zeroing function is automatically aborted and discarded if a subsequent product (P₂, P₃ ...) reaches the weighing platform (M) before the zeroing function has been successfully completed.

2. Method according to claim 1, **characterized in that** two products (P₁, P₂ ...) supplied directly successively to the weighing belt form a gap between them, and the zeroing function is triggered as soon as the front end of the gap has left the weighing platform.

3. Method according to claim 1 or 2, wherein each product (P) has a front end as a leading edge (A) and a rear end as a trailing edge (B), the method comprising the following steps:
a) conveying the product (P) in the conveying direction (X);
b) determining the time point (T) at which the leading edge (A) or the trailing edge (B) reaches a predeterminable target position (x_{T}) downstream of the weighing platform (M);
c) initiating a zeroing function on the weighing scale (W) depending on the time point (T).

4. Method according to claim 3, **characterized in that** the time point (T) is determined by means of
a) a sensor (S₁) positioned upstream of the weighing platform (M), as viewed in the conveying direction (X), or
b) a sensor (S₂) positioned downstream of the weighing platform (M), as viewed in the conveying direction (X), or
c) a sensor (Sₑ) positioned along the weighing platform (M), as viewed in the conveying direction (X),
the sensor (S₁, S₂, Sₑ) detecting
i) the leading edge (A) and/or
ii) the trailing edge (B)
in order to determine the time point (T).

5. Method according to claim 3 or 4, **characterized in that** the time point (T) is determined by taking into account the product length (L) and/or the conveying speed of the product (P) and/or the length of the weighing platform (M) in the conveying direction and/or the length of a gap according to claim 2.

6. Method according to claim 4, feature b) and feature ii).

7. Method according to any of the preceding claims, wherein a sensor (S₁) positioned upstream of the weighing platform (M) is provided, and wherein the detection of a leading edge (A) of the product (P) by this sensor (S₁) terminates a zeroing function that is already taking place, immediately or after a predeterminable time.

8. Method according to any of the preceding claims, a sensor (S₁) positioned upstream of the weighing platform (M) being provided, **characterized in that** a zeroing function is triggered when the upstream sensor (S₁) detects a leading edge (A) of the product and no zeroing function is taking place at this time point.

9. Method according to any of the preceding claims, **characterized in that** a zeroing function according to claim 1a) is switched on as a mode if a previously active zero-tracking function can no longer work.

10. Method according to any of the two preceding claims,
**characterized in that** the zero-tracking function takes place in an in particular digital or intelligent weighing cell of the weighing scale (W), whereas the zeroing function takes place in a control unit (C) formed separately from the weighing cell.

11. Automatic weighing scale (W) comprising a weighing platform (M), the weighing scale (W) being designed to convey a product (P) to be weighed in a conveying direction (X) onto the weighing platform (M) and down therefrom, and the product (P) having a front end as a leading edge (A) and a rear end as a trailing edge (B) as viewed in the conveying direction (X),
**characterized in that**
the weighing scale (W) is designed to carry out a method according to any of the preceding method claims.

12. Automatic weighing scale (W) according to the preceding claim,
**characterized in that** the weighing scale (W) has at least one sensor (S₁, S₂, Sₑ) in order to detect the leading edge (A) and/or trailing edge (B) of a product (P) conveyed in the X direction at a predeterminable sensor position (x) or target position (x_{T}).

13. Automatic weighing scale (W) according to the preceding claim for a method according to claim 3, **characterized in that** the predeterminable target position (x_{T}) is downstream of the weighing platform (M).

14. Automatic weighing scale (W) according to any of claims 11-13,
**characterized in that** the weighing scale is designed to determine the time point (T) at which the leading edge (A) or the trailing edge (B) of a product (P) reaches the target position (x_{T}).

15. Automatic weighing scale (W) according to any of claims 11-14, comprising a control unit (C), wherein the control unit (C) is designed to detect and process signals from at least one sensor (S₁, S₂, Se) and/or to control the product conveyance and/or to carry out the zeroing function.

## Revendications

1. Procédé permettant la remise à zéro automatique d'une balance (W), en particulier d'une balance (W) automatique, la balance comprenant une plate-forme de pesée (M) portée par une cellule de pesée (D), dans lequel des produits (P₁, P₂...) discrets sont amenés à la plate-forme de pesée (M) dans un sens de transport (X), lesquels produits sont pesés individuellement dans des cycles de pesée successifs,
**caractérisé en ce**
a) **qu'**une fonction de remise à zéro est déclenchée automatiquement par chaque produit (P₁, P₂...) à peser à la fin du cycle de pesée respectif lorsque le dernier produit (P₁) transporté, en particulier pesé, sur la plate-forme de pesée a quitté la plate-forme de pesée (M) et que la plate-forme de pesée n'est pas chargée de produits discrets à transporter, et
b) **que** la fonction de remise à zéro est automatiquement interrompue et rejetée lorsqu'un produit (P₂, P₃...) suivant atteint la plate-forme de pesée (M) avant que la fonction de remise à zéro ne soit achevée avec succès.

2. Procédé selon la revendication 1, **caractérisé en ce que** deux produits (P₁, P₂...) amenés directement l'un après l'autre sur la bande de pesée forment entre eux un interstice, et la fonction de remise à zéro est déclenchée dès que l'extrémité avant de l'interstice a quitté la plate-forme de pesée.

3. Procédé selon la revendication 1 ou 2, dans lequel chaque produit (P) présente une extrémité avant sous forme de flanc avant (A) et une extrémité arrière sous forme de flanc arrière (B), le procédé comprenant les étapes suivantes :
a) transport du produit (P) dans le sens de transport (X) ;
b) détermination de l'instant (T) où le flanc avant (A) ou le flanc arrière (B) atteint une position de consigne (x_{T}) pouvant être prédéfinie en aval de la plate-forme de pesée (M) ;
c) déclenchement d'une fonction de remise à zéro sur la balance (W) en fonction de l'instant (T).

4. Procédé selon la revendication 3, **caractérisé en ce que** l'instant (T) est déterminé, vu dans le sens de transport (X), au moyen
a) d'un capteur (S₁) positionné en amont de la plate-forme de pesée (M), ou
b) d'un capteur (S₂) positionné en aval de la plate-forme de pesée (M), ou
c) d'un capteur (Sₑ) positionné le long de la plate-forme de pesée (M),
dans lequel le capteur (S₁, S₂, Sₑ) détecte, pour la détermination de l'instant (T),
i) le flanc avant (A) et/ou
ii) le flanc arrière (B).

5. Procédé selon la revendication 3 ou 4, **caractérisé en ce que** l'instant (T) est déterminé en prenant en compte la longueur de produit (L) et/ou la vitesse de transport du produit (P) et/ou la longueur de la plate-forme de pesée (M) dans le sens de transport et/ou la longueur d'un interstice selon la revendication 2.

6. Procédé selon la revendication 4, caractéristique b) et caractéristique ii).

7. Procédé selon l'une des revendications précédentes, dans lequel un capteur (S₁) positionné en amont de la plate-forme de pesée (M) est prévu, et dans lequel la détection d'un flanc avant (A) du produit (P) par ledit capteur (S₁) met fin à une fonction de remise à zéro déjà en cours, immédiatement ou après un temps prédéfini.

8. Procédé selon l'une des revendications précédentes, dans lequel un capteur (S₁) positionné en amont de la plate-forme de pesée (M) est prévu, **caractérisé en ce qu'**une fonction de remise à zéro est déclenchée lorsque le capteur (S₁) en amont détecte un flanc avant (A) du produit et qu'aucune fonction de remise à zéro n'est en cours à cet instant.

9. Procédé selon l'une des revendications précédentes,
**caractérisé en ce qu'**une fonction de remise à zéro selon la revendication 1a) est activée en tant que mode si une fonction d'ajustement à zéro jusqu'alors active ne peut plus fonctionner.

10. Procédé selon l'une des deux revendications précédentes,
**caractérisé en ce que** la fonction d'ajustement à zéro est exécutée dans une cellule de pesée, en particulier numérique ou intelligente, de la balance (W), tandis que la fonction de remise à zéro est exécutée dans une unité de commande (C) réalisée séparément de la cellule de pesée.

11. Balance (W) automatique comportant une plate-forme de pesée (M), dans laquelle la balance (W) est configurée pour transporter un produit (P) à peser dans un sens de transport (X) sur la plate-forme de pesée (M) et le faire descendre de celle-ci, et dans laquelle le produit (P) présente une extrémité avant, vue dans le sens de transport (X), sous forme de flanc avant (A) et une extrémité arrière sous forme de flanc arrière (B),
**caractérisée en ce**
**que** la balance (W) est configurée pour mettre en œuvre un procédé selon l'une des revendications de procédé précédentes.

12. Balance (W) automatique selon la revendication précédente,
**caractérisée en ce que** la balance (W) présente au moins un capteur (S₁, S₂, Sₑ) afin de détecter le flanc avant (A) et/ou le flanc arrière (B) d'un produit (P) transporté dans le sens X au niveau d'une position de capteur (x) ou d'une position de consigne (x_{T}) pouvant être prédéfinie.

13. Balance (W) automatique selon la revendication précédente pour un procédé selon la revendication 3, **caractérisée en ce que** la position de consigne (x_{T}) pouvant être prédéfinie est située en aval de la plate-forme de pesée (M).

14. Balance (W) automatique selon l'une des revendications 11 à 13,
**caractérisée en ce que** la balance est configurée pour déterminer l'instant (T) où le flanc avant (A) ou le flanc arrière (B) d'un produit (P) atteint la position de consigne (x_{T}).

15. Balance (W) automatique selon l'une des revendications 11 à 14, comprenant une unité de commande (C), dans laquelle l'unité de commande (C) est configurée pour détecter et traiter des signaux d'au moins un capteur (S₁, S₂, Se) et/ou pour commander le transport de produit et/ou pour mettre en œuvre la fonction de remise à zéro.
